**Europäisches Patentamt**

**European Patent Office**

**Office européen des brevets**

(19)

(11) Numéro de publication : **0 362 051 B1**

# (12) FASCICULE DE BREVET EUROPEEN

(45) Date de publication du fascicule du brevet :
**10.06.92 Bulletin 92/24**

(51) Int. Cl.⁵ : **F02K 1/12**, F02K 1/82

(21) Numéro de dépôt : **89402636.8**

(22) Date de dépôt : **27.09.89**

(54) **Tuyère d'éjection bidimensionnelle de turboréacteur et son système de commande.**

(30) Priorité : **28.09.88 FR 8812648**

(43) Date de publication de la demande :
**04.04.90 Bulletin 90/14**

(45) Mention de la délivrance du brevet :
**10.06.92 Bulletin 92/24**

(84) Etats contractants désignés :
**DE FR GB IT SE**

(56) Documents cités :
**AU-A- 424 000**
**FR-A- 2 189 642**
**FR-A- 2 608 680**
**GB-A- 1 141 051**
**US-A- 2 928 238**

(73) Titulaire : **SOCIETE NATIONALE D'ETUDE ET DE CONSTRUCTION DE MOTEURS D'AVIATION, "S.N.E.C.M.A."**
**2, Boulevard du Général Martial Valin**
**F-75015 Paris (FR)**

(72) Inventeur : **Carteron, Olivier**
**25 ter rue de Milly**
**F-91720 Maisse (FR)**
Inventeur : **Jourdain, Gérard, Ernest, André**
**4 Résidence l'Arcadie saintry sur Seine**
**F-91100 Corbeil-Essonnes (FR)**

(74) Mandataire : **Moinat, François et al**
**S.N.E.C.M.A. Service des Brevets Boîte Postale 81**
**F-91003 Evry Cédex (FR)**

Jouve, 18, rue Saint-Denis, 75001 PARIS

## Description

La présente invention concerne une tuyère d'éjection de turboréacteur, d'un type bidimensionnelle à section réglable, comportant deux volets extérieurs, dits froids et deux volets intérieurs, dits chauds, lesdits volets étant montés pivotants à l'extrémité fixe du canal d'éjection des gaz et elle concerne plus particulièrement un dispositif de commande et de synchronisation des déplacements desdits volets mobiles.

Il est bien connu, pour obtenir le réglage des sections d'une tuyère d'éjection de turboréacteur, d'utiliser une ou plusieurs couronnes annulaires constituées chacune d'une pluralité de volets mobiles, notamment pivotants, associés à un système de commande. Des exemples de telles constructions sont donnés par EP-A-0 149 943, FR-A-2 602 274 ou FR 2.617.910, le but poursuivi étant toujours d'obtenir la poussée optimale en assurant les performances, notamment de rendement et de consommation spécifique, au moyen d'un réglage de section de tuyère adapté aux conditions de fonctionnement du turboréacteur.

Pour certaines applications toutefois, une solution préférée, notamment dans un but de simplification et en vue de réduire les coûts et de faciliter la maintenance, consiste à utiliser des tuyères dites "bidimensionnelles", comprenant une structure fixe, à section carrée ou rectangulaire, portant deux parois latérales fixes, disposées selon une orientation générale verticale et reliant deux volets mobiles, notamment pivotants, disposés selon une orientation générale horizontale et dont les variations de position font varier la section d'ouverture de la tuyère. Des exemples de telles constructions sont donnés par EP-A-0 180 534 ou FR-A-2 608 680.

Cependant, lorsque les mêmes critères aérodynamiques et les mêmes possibilités de réglage doivent être retenus pour une tuyère d'éjection bidimensionnelle, les efforts de pression sur un volet deviennent beaucoup plus importants que dans le cas où ces efforts de pression interne des gaz d'éjection sont répartis sur un nombre plus élevé de volets dans une tuyère à couronnes annulaires multi-volets. Un des buts de l'invention est par conséquent de permettre la mise en oeuvre d'une solution à tuyère d'éjection bidimensionnelle qui n'impose pas un renforcement de structure et notamment du canal d'éjection qui conduirait à une augmentation de masse inacceptable, d'autant plus que la forme quadrangulaire est susceptible de générer des points de concentration de contraintes provenant des efforts subis en fonctionnement.

Une tuyère d'éjection de turboréacteur, du type précité, répondant à ces conditions est caractérisée en ce que chaque groupe d'un volet intérieur et d'un volet extérieur est associé à un palonnier articulé au canal et dont chaque extrémité coopère avec une vis à billes faisant partie d'un vérin commandé par câble, de manière que les deux palonniers et les deux vérins forment un cadre rigide et constituent les moyens de commande et de synchronisation des volets mobiles de tuyère.

Divers aménagements complémentaires avantageux sont également appliqués à ladite tuyère d'éjection de turboréacteur.

Le système de commande de la tuyère d'éjection de turboréacteur conforme à l'invention permet ainsi d'obtenir les résultats recherchés et notamment :

– faire agir la commande sur les volets mobiles de tuyère dans la direction de la résultante des efforts de pression et, en sens opposé, équilibrer en permanence les efforts appliqués par les gaz et les efforts de commande ;

– contrôler en permanence la section d'éjection des gaz, tout en évitant d'introduire des efforts dans la structure fixe du canal d'éjection. En effet, dans le cadre rigide formé par les deux palonniers et les deux vérins à vis constituant le dispositif de commande, tous les efforts induits par la cinématique de la tuyère et par la pression des gaz s'annulent en efforts internes, sans transmission d'effort ponctuel à la structure de canal. Les seuls efforts subsistants sont des efforts de traction induits par la traînée des gaz dans la tuyère. Le dispositif de l'invention présente en outre l'avantage d'assurer la double fonction de commande des sections de tuyère et de synchronisation des déplacements des volets mobiles par les mêmes éléments, les vis à billes, tout en assurant également l'asservissement des déplacements des volets extérieurs à ceux des volets intérieurs.

D'autres caractéristiques et avantages de l'invention seront mieux compris à la lecture de la description qui va suivre d'un mode de réalisation d'une tuyère d'éjection de turboréacteur, bidimensionnelle et à section réglable, en référence aux dessins annexés sur lesquels :

– la figure 1 est une demi-vue schématique, en coupe longitudinale par un plan passant par l'axe de rotation du turboréacteur, d'une tuyère d'éjection bidimensionnelle conforme à l'invention ;

– la figure 2 est une vue schématique, en coupe transversale selon la ligne II-II de la figure 1, de la tuyère bidimensionnelle représentée sur la figure 1 ;

– la figure 3 est une vue schématique partielle, suivant la flèche F de la figure 1, de la tuyère bidimensionnelle représentée sur les figures 1 et 2.

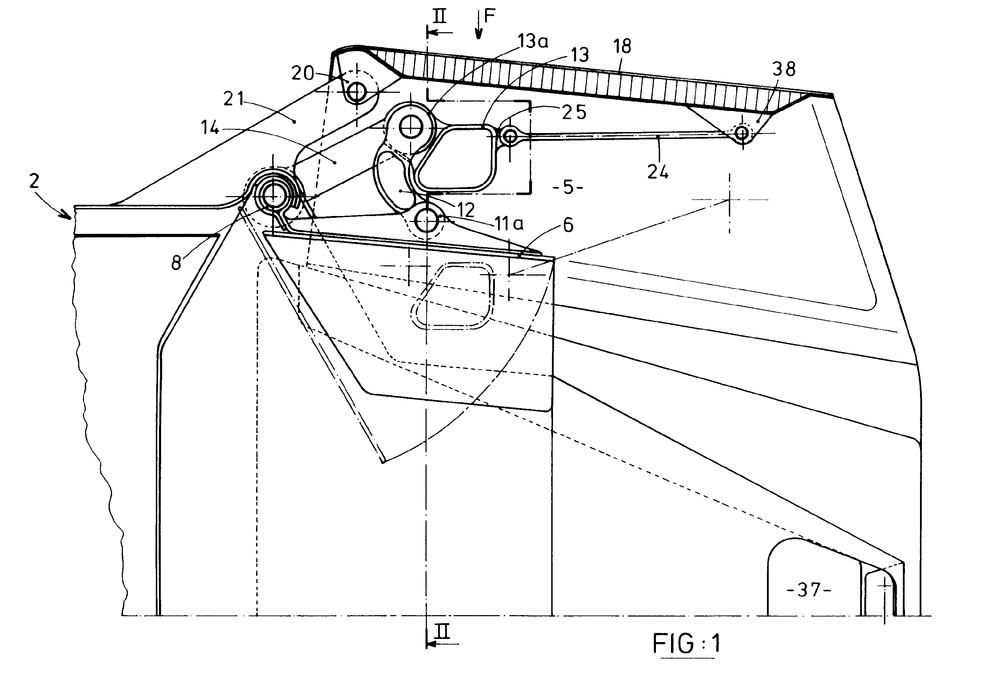

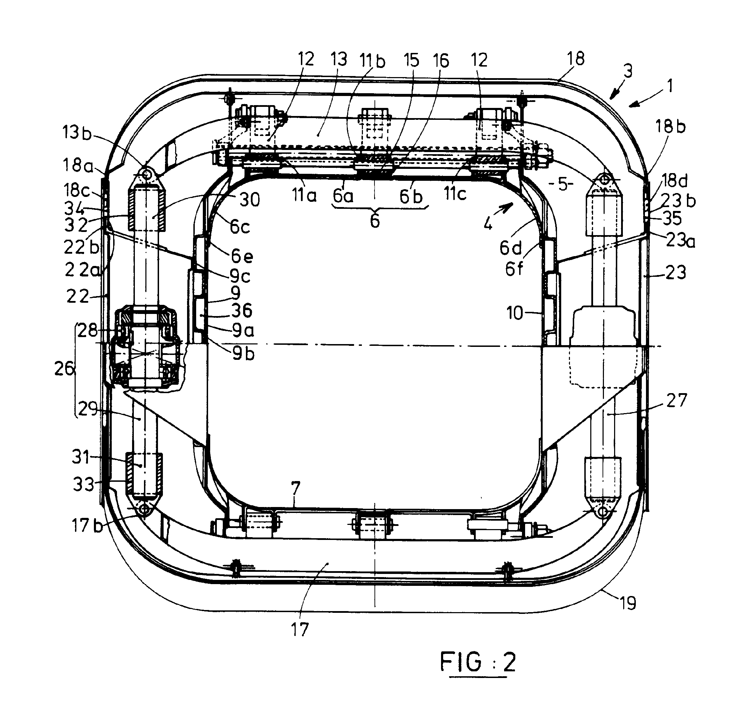

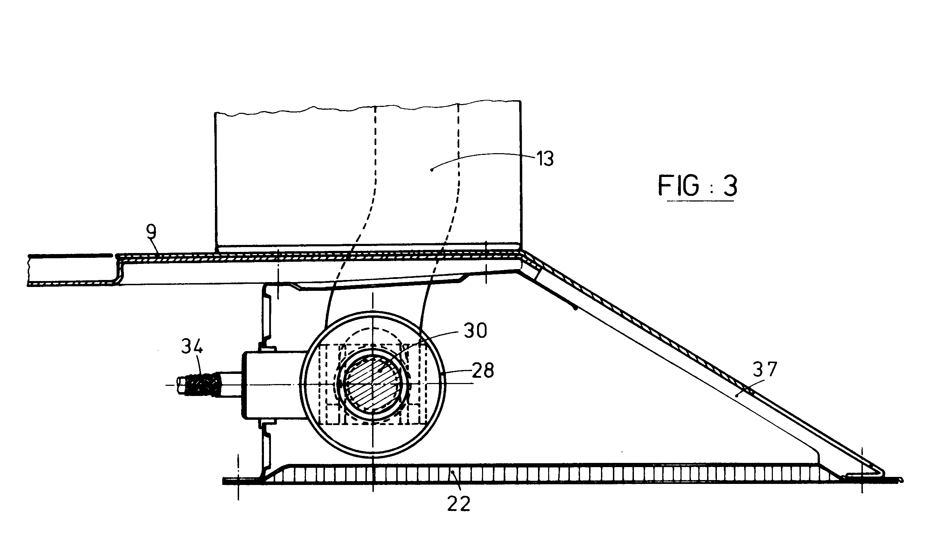

Selon le mode de réalisation de l'invention représenté sur les figures 1 à 3, une tuyère 1 d'éjection de turboréacteur d'un type dit "bidimensionnelle" monté à l'extrémité aval d'un canal 2 d'éjection des gaz se compose d'une structure extérieure 3 et d'une structure intérieure 4, chacune respectivement en forme de tronc de prisme à base carrée, ladite structure intérieure 4 comportant les parois qui délimitent la veine principale de circulation des gaz du turboréacteur et étant disposée à l'intérieur de ladite structure extérieure 3 de manière à ménager un espace 5 entre elles. La base carrée selon le mode de réalisation représenté sur les dessins peut devenir rectangulaire tout en restant dans l'objet de la présente invention. Lesdites parois de la structure intérieure 4 sont constituées, d'une part, de deux volets 6 et 7, disposés selon une orientation générale horizontale, chacun étant articulé au moyen de chapes 8, disposées à son extrémité amont, sur le canal 2 et, d'autre part, de deux panneaux fixes 9 et 10 verticaux, liés rigidement audit canal 2. Chacun des volets intérieurs, encore appelés volets chauds, tel que 6 est constitué de deux demi-volets 6a et 6b. Le demi-volet 6a porte deux articulations 11a et 11b qui coopèrent chacune avec un levier 12, lui-même articulé sur un palonnier 13 transversal au moyen d'une articulation 13a qui coopère également avec une biellette 14 de liaison au canal 2.

Le demi-volet 6b porte de même une articulation 11c reliée au palonnier 13 par un levier 12. Au niveau de l'articulation 11b, le demi-volet 6a comporte une portée 15 sur laquelle vient en appui le bord latéral 16 du demi-volet 6b. De même, le volet 7 est relié à un palonnier 17.

De manière analogue, les parois de la structure extérieure 3 sont également constituées, d'une part, de deux volets 18 et 19, homologues des volets intérieurs 6 et 7, disposés également selon une orientation générale horizontale, chacun étant articulé au moyen de chapes 20, disposées à son extrémité amont, sur deux ferrures 21, solidaires du canal 2 et, d'autre part, de deux panneaux fixes 22 et 23 verticaux, liés rigidement au canal 2. Chacun des volets extérieurs, encore appelés volets froids, tel que 18 porte à son extrémité aval deux chapes 38 qui coopèrent avec deux biellettes 24 dont l'autre extrémité coopère avec une articulation 25 portée par le palonnier 13.

Dans l'espace 5, ménagé entre les structures intérieure 4 et extérieure 3, où sont disposés lesdits palonniers 13 et 17, sont également placés, de chaque côté entre les panneaux verticaux fixes, 9 et 22, d'une part, et 10 et 23, d'autre part, deux vérins à vis 26 et 27.

Chacun desdits vérins, tel que 26, est constitué d'un boîtier 28 supportant une tige 29 entraînée en rotation par un système d'un type connu à engrenages. Chaque extrémité de la tige 29 comporte une partie filetée comme il est connu dans une vis à billes, respectivement 30 et 31 qui coopèrent chacune par l'intermédiaire d'un embout, respectivement 32 et 33, muni d'un alésage taraudé et porté, de manière articulée, par une extrémité telle que 13b et 17b, des palonniers 13 et 17. Les filetages des parties 30 et 31 de la tige 29 sont inverses l'un de l'autre, un pas étant à gauche et l'autre à droite. Les deux palonniers 13 et 17 associés aux deux vérins à vis 26 et 27 forment ainsi un cadre rigide et constituent les moyens de commande des déplacements des volets mobiles 6 et 7 de la tuyère d'éjection bidimensionnelle. Le fonctionnement en est le suivant.

Le boîtier 28 de chaque vérin à vis, 26 et 27 est relié par un câble flexible 34 aux commandes centrales de l'appareil. Selon que ledit câble 34 tourne dans un sens ou dans l'autre, les deux embouts 32 et 33 s'écartent ou se rapprochent, ce qui, par le déplacement sensiblement radial des palonniers 13 et 17, entraîne le pivotement des volets 6 et 7, dans un sens d'ouverture ou de fermeture de la tuyère d'éjection, tandis que les pivotements des volets extérieurs 18 et 19 sont asservis à ceux des volets intérieurs 6 et 7 par les biellettes 24.

Sur la figure 1, on a représenté en traits pleins, une position du volet intérieur 6, du palonnier 13, du levier 12 et de la biellette 24 correspondant à une position ouverte de la tuyère d'éjection et les éléments ont été représentés en traits mixtes pour une position fermée de la tuyère d'éjection. Chacun des demi-volets intérieurs, tels que 6a et 6b, a une liberté de déplacement latéral sur ses supports et présente sur son bord latéral une partie incurvée, respectivement 6c et 6d, dont l'extrémité, 6e ou 6f, porte, sous l'influence de l'effort latéral des gaz, sur la surface des panneaux verticaux intérieurs 9 et 10, de manière à assurer l'étanchéité en fonctionnement. Dans le même but, les bords latéraux, tels que 18a et 18b, des volets extérieurs 18 et 19 portent à leur extrémité un bourrelet d'étanchéité, 18c ou 18d, qui coulisse dans un espace interne, 34 et 35, respectivement ménagés sur chaque bord, respectivement supérieur et inférieur, de chaque panneau extérieur vertical, 22 et 23, notamment entre les deux peaux, respectivement 22a, 22b et 23a, 23b qui constituent lesdits panneaux. On notera que les moyens de commande des volets mobiles 6 et 7 constitués par les palonniers 13 et 17 et les vérins à vis 26 et 27 assurent également la synchronisation de leurs déplacements.

Par ailleurs, chacun des panneaux fixes intérieurs verticaux 9 et 10 est constitué de deux peaux, intérieure telle que 9a et extérieure telle que 9b. La peau intérieure 9a, selon le mode de réalisation représenté aux dessins, est, par exemple, en un matériau céramique de type SiC-SiC et la peau extérieure 9b est en matériau composite. Ladite peau extérieure 9b comporte des nervures 9c de renforcement à section en oméga, de manière à constituer des passages 36 à l'intérieur desdits panneaux 9 et 10 destinés à permettre une circulation d'air de refroidissement. Ces passages 36 débouchent sur des orifices 37 à l'extrémité aval des panneaux 9 et 10, rejetant ainsi l'air de refroidissement dans le flux principal des gaz éjectés par la tuyère.

## Revendications

1. Tuyère d'éjection, montée à l'extrémité aval d'une structure fixe à section carrée ou rectangulaire d'un canal d'éjection (2) de turboréacteur, comportant deux volets extérieurs (18, 19) dits froids et deux volets intérieurs (6,7), dits chauds, lesdits volets (18, 19, 6, 7) étant montés pivotants à l'extrémité dudit canal (2), disposés selon une orientation générale horizontale et respectivement reliés par deux panneaux verticaux (9, 10, 22, 23), un de chaque côté, liés rigidement au canal (2), constituant deux structures (3, 4) en forme de trous de prisme à base carrée ou rectangulaire ménageant entre elles un espace (5) dans lequel sont disposés des moyens de commande caractérisée en ce que chaque groupe d'un volet intérieur (6, 7) et d'un volet extérieur (18, 19) est associé à un palonnier (13, 17) articulé au canal (2) et dont chaque extrémité (13b, 17b) coopère avec une vis à billes (29) faisant partie d'un vérin (26, 27) commandé par câble (34) de manière que les deux palonniers (13, 17) et les deux vérins (26, 27) forment un cadre rigide et constituent lesdits moyens de commande et de synchronisation des volets mobiles (6, 7, 18, 19) de tuyère.

2. Tuyère d'éjection de turboréacteur selon la revendication 1 dans laquelle chaque volet interne (6, 7) est constitué de deux demi-volets (6a, 6b), le premier demi-volet (6a) portant deux articulations (11a, 11b) associée chacune avec un levier (12) articulé sur le palonnier (13, 17) et le second demi-volet (6b) comportant un bord (16) coopérant avec une portée (15) ménagée sur le premier demi-volet (6a) et portant une articulation (11c) associée avec un levier (12) articulé sur le palonnier (13, 17).

3. Tuyère d'éjection de turboréacteur selon la revendication 2 dans laquelle chaque demi-volet intérieur (6a, 6b) a une liberté de déplacement latéral et comporte un bord latéral (6c, 6d) incurvé vers l'intérieur dont l'extrémité (6e, 6f) se place en contact d'étanchéité avec ledit panneau vertical (9, 10) correspondant.

4. Tuyère d'éjection de turboréacteur selon l'une quelconque des revendications 1 à 3 dans laquelle lesdits volets extérieurs (18, 19) portent, chacun à son extrémité aval, deux chapes (38) coopérant chacune avec l'extrémité d'une biellette (24) dont l'autre extrémité est articulée sur ledit palonnier (13, 17) de manière à asservir le déplacement des volets extérieurs (18, 19) à celui des volets intérieurs (6, 7).

5. Tuyère d'éjection de turboréacteur selon la revendication 4 dans laquelle chaque volet extérieur (18, 19) comporte des bords latéraux (18a, 18b) recourbés, munis d'un bourrelet d'étanchéité (18c, 18d) coulissant entre deux peaux (22a, 22b, 23a, 23b) du panneau vertical (22, 23) correspondant.

6. Tuyère d'éjection de turboréacteur selon l'une quelconque des revendications 1 à 5, dans laquelle lesdits panneaux verticaux (9, 10) associés aux volets intérieurs (6, 7) sont constitués d'une peau intérieure (9a) et d'une peau extérieure (9b) renforcée par des nervures (9c) à section en oméga, ménageant entre elles des passages (36) où circule de l'air de refroidissement, sortant dans le flux principal des gaz chauds par des orifices (37) ménagés à l'extrémité aval desdits panneaux.

## Claims

1. Ejection nozzle, mounted at the downstream end of a fixed structure, with a square or rectangular cross-section, of an ejection channel (2) of a jet engine, comprising two, so-called cold outer flaps (18, 19) and two, so-called hot inner flaps (6, 7), the said flaps (18, 19, 6, 7) being mounted pivotally at the end of the said channel (2), arranged along a generally horizontal orientation and respectively linked by two vertical panels (9, 10, 22, 23), one on each side, rigidly linked to the channel (2), constituting two structures (3, 4) in the form of a truncated prism with a square or rectangular base, creating between them a space (5) in which are arranged means of control, characterised in that each group of an inner flap (6, 7) and of an outer flap (18, 19) is associated with a control rod (13, 17) articulated to the channel (2) and each of whose ends (13b, 17b) interacts with a ball screw (29) forming part of a jack (26, 27) controlled by cable (34) in such a way that the two control rods (13, 17) and the two jacks (26, 27) form a rigid frame and constitute the said means of control and of synchronisation of the movable nozzle flaps (6, 7, 18, 19).

2. Ejection nozzle of a jet engine according to Claim 1, in which each inner flap (6, 7) is constituted by two half-flaps (6a, 6b), the first half-flap (6a) bearing two articulations (11a, 11b) each associated with a lever (12) which is articulated onto the control rod (13, 17) and the second half-flap (6b) comprising an edge (16) interacting with a bearing surface (15) created on the first half-flap (6a) and bearing an articulation (11c) associated with a lever (12) which is articulated onto the control rod (13, 17).

3. Ejection nozzle of a jet engine according to Claim 1, in which each inner half-flap (6a, 6b) has lateral freedom of movement and comprises an inwardly curved lateral edge (6c, 6d) whose end (6e, 6f) is placed in leakproof contact with the said corresponding vertical panel (9, 10).

4. Ejection nozzle of a jet engine according to any one of Claims 1 to 3, in which the said outer flaps (18, 19) each bear, at its downstream end, two yokes (38) each interacting with the end of a small connecting rod (24) whose other end is articulated onto the said control rod (13, 17) in such a way as to slave the movement of the outer flaps (18, 19) to that of the inner flaps (6, 7).

5. Ejection nozzle of a jet engine according to Claim 4, in which each outer flap (18, 19) comprises curved lateral edges (18a, 18b) equipped with a leaktight sealing strip (18c, 18d) sliding between two skins (22a, 22b, 23a, 23b) of the corresponding vertical panel (22, 23).

6. Ejection nozzle of a jet engine according to any one of Claims 1 to 5, in which the said vertical panels (9, 10) associated with the inner flaps (6, 7) are constituted by an inner skin (9a) and by an outer skin (9b) which are reinforced by ribs (9c) with an omega-shaped cross-section, creating passages (36) between themselves where the cooling air circulates, exiting into the principal flow of the hot gases through orifices (37) created at the downstream end of the said panels.

**Patentansprüche**

1. Am stromabwärtigen Ende einer festen Struktur mit quadratischem oder rechteckigem Querschnitt eines Ausströmkanals (2) eines Turbotriebwerks montierte Schubdüse mit zwei als kalte flappen bezeichneten äußeren flappen (18, 19) und zwei als heiße flappen bezeichneten inneren flappen (6, 7), wobei diese flappen (18, 19, 6, 7), die schwenkbar am Ende des genannten fanals (2) montiert sind, im wesentlichen horizontal ausgerichtet und jeweils durch zwei vertikale Platten (9, 10, 22, 23), und zwar einer auf jeder Seite, miteinander verbunden sind, die ihrerseits fest mit dem fanal (2) verbunden sind, so daß zwei Strukturen in Form von Prismenstümpfen mit quadratischer oder rechteckiger Basis gebildet werden, die zwischen sich einen Hohlraum begrenzen, in dem Mittel zur Steuerung angeordnet sind, dadurch gekennzeichnet, daß jeder aus einer inneren flappe (6, 7) und einer äußeren flappe (18, 19) bestehenden Gruppe ein Steuerhebel (13, 17) zugeordnet ist, der mit dem fanal (2) gelenkig verbunden ist und mit jedem seiner Enden (13b, 17b) mit einem fugelgewindetrieb (29) zusammenwirkt, der Bestandteil einer durch fabel betätigten Schraubenwinde (26, 27) ist, derart daß die beiden Steuerhebel (13. 17) und die beiden Winden (26, 27) einen starren Rahmen bilden und die genannten Mittel zur Steuerung und Synchronisierung der beweglichen Düsenklappen (6, 7, 18, 19) darstellen.

2. Turbotriebwerkdüse nach Anspruch 1, bei der jede der inneren flappen (6, 7) aus zwei Halbklappen (6a, 6b) besteht, von denen die erste (6a) zwei Gelenke (11a, 11b) trägt, die mit je einem Hebel (12) verbunden sind, der an dem Steuerhebel (13, 17) angelenkt ist, während die zweite Halbklappe (6b) einen mit einer an der ersten Halbklappe (6a) ausgebildeten Auflagerfläche (15) zusammenwirkenden Rand (16) besitzt und ein Gelenk (11c) trägt, das mit einem Hebel (12) verbunden ist, der an dem Steuerhebel (13, 17) angelenkt ist.

3. Turbotriebwerkdüse nach Anspruch 2, bei der jede der inneren Halbklappen (6a, 6b) seitliche Bewegungsfreiheit besitzt und einen nach innen gekrümmten seitlichen Rand (6c, 6d) aufweist, dessen Endbereich (6e, 6f) sich in Dichtungskontakt mit der genannten vertikalen Platte (9, 10) anordnet.

4. Turbotriebwerkdüse nach einem der Ansprüche 1 bis 3, bei der jede der äußeren flappen (18, 19) in ihrem stromabwärtigen Endbereich zwei Gabelbügel (38) trägt, die jeweils mit einem Ende einer Pleuelstange (24) zusammenwirken, deren anderes Ende an dem Steuerhebel (13, 17) angelenkt ist, so daß die Verschwenkung der äußeren flappen (18, 19) durch die Verschwenkung der inneren flappen (6, 7) gesteuert wird.

5. Turbotriebwerkdüse nach Anspruch 4, bei der jede der äußeren flappen (18, 19) umgebogene und mit einem Dichtungswulst (18c, 18d) versehene Außenränder (18a, 18b) besitzt, die zwischen zwei Schichten (22a, 22b, 23a, 23b) der betreffenden vertikalen Platte (22, 23) gleiten.

6. Turbotriebwerkdüse nach einem der Ansprüche 1 bis 5, bei der die den inneren flappen (6, 7) zugeordneten vertikalen Platten (9, 10) aus einer inneren Schicht (9a) und einer äußeren Schicht (9b) bestehen, die durch Rippen (9c) mit omegaförmigem Querschnitt verbunden sind, zwischen denen Durchgänge (36) gebildet sind, in denen fühlluft zirkuliert, die durch am stromabwärtigen Ende der Platten vorgesehene Öffnungen (37) in die Hauptströmung der heißen Gase austritt.

FIG : 1

EP 0 362 051 B1

FIG : 2

FIG : 3